Europäisches Patentamt

European Patent Office

Office européen des brevets

(11) Numéro de publication : **0 347 294 B1**

(12) **FASCICULE DE BREVET EUROPEEN**

(45) Date de publication du fascicule du brevet :
**22.04.92 Bulletin 92/17**

(51) Int. Cl.$^5$ : **B25J 17/02, H01R 43/26, B23P 19/00**

(21) Numéro de dépôt : **89401615.3**

(22) Date de dépôt : **09.06.89**

(54) **Poignet de robot destiné à assembler notamment un connecteur électrique mâle ou femelle à un connecteur électrique complémentaire.**

(30) Priorité : **13.06.88 FR 8807850**

(43) Date de publication de la demande :
**20.12.89 Bulletin 89/51**

(45) Mention de la délivrance du brevet :
**22.04.92 Bulletin 92/17**

(84) Etats contractants désignés :
**DE GB IT**

(56) Documents cités :
**DE-A- 2 935 704
DE-A- 3 434 258
GB-A- 1 481 624
GB-A- 2 198 111
US-A- 3 702 982
US-A- 4 661 037
US-A- 4 669 192**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Vassal, Gérard
Rue du Petit Plessis Plessis Saint Benoist
F-91410 Dourdan (FR)**

(74) Mandataire : **Durand, Yves Armand Louis et al
CABINET WEINSTEIN 20, Avenue de
Friedland
F-75008 Paris (FR)**

Jouve, 18, rue Saint-Denis, 75001 PARIS

## Description

La présente invention concerne un poignet de robot destiné notamment à la pose de connecteurs électriques et plus précisément à assembler un connecteur électrique mâle ou femelle à un connecteur complémentaire.

Pour effectuer l'assemblage d'un connecteur électrique à sa contre-partie mâle ou femelle et réaliser ainsi la liaison électrique, le robot doit tout d'abord présenter un moyen préhenseur à la position nominale du connecteur électrique puis, une fois le connecteur électrique saisi, le présenter au-dessus de la contre-partie à la position nominale de cette dernière afin que le préhenseur puisse mettre en place le connecteur électrique sur sa contre-partie. Une fois l'assemblage effectué, le robot commande l'extraction du moyen préhenseur du connecteur électrique et de sa contre-partie. Cependant, dans la mesure où le connecteur électrique et sa contre-partie sont disposés à des emplacements déterminés souvent différents de leurs positions nominales, le moyen préhenseur ne peut saisir correctement le connecteur électrique et/ou assembler correctement le connecteur électrique à sa contre-partie.

US-A-4 669 192 décrit un poignet de robot conforme au préambule de la revendication 1 et destiné à saisir une pièce et à l'insérer dans une partie de réception correspondante lorsque la pièce et la partie de réception ne sont pas exactement co-linéaires l'une avec l'autre afin de minimiser les efforts d'assemblage. Cependant, ce document antérieur ne pose ni ne résoud le problème de contrainte par exemple lors du retrait du moyen de préhension et de mise en place de la pièce.

La présente invention a pour but de résoudre les problèmes ci-dessus en réalisant un poignet de robot conçu pour à la fois compenser tout mésalignement ou défaut de positionnement d'une pièce relativement à une partie de réception correspondante de la pièce lors de l'assemblage de cette dernière et permettre une extraction sans contrainte du moyen de préhension de la pièce et de son logement une fois la pièce et son logement assemblés.

Pour cela, le poignet de robot du type comprenant un support relié à l'extrémité du bras du robot et un moyen de préhension d'une pièce mâle ou femelle et de mise en place de celle-ci sur la pièce complémentaire, le moyen de préhension et de mise en place étant relié au support et positionné par le robot relativement à la pièce mâle ou femelle et ensuite à la pièce complémentaire à leurs positions nominales respectives, le moyen de préhension et de mise en place étant relié au support par une pièce intermédiaire comprenant une première partie en forme de trémie pyramidale maintenue par un premier organe élastique de rappel dans un logement de forme complémentaire du support en position de repos, l'ensemble constitué par le moyen de préhension et de mise en place et la première partie en forme de trémie se décentrant relativement au logement du support à l'encontre de la force de rappel de l'organe élastique pour compenser un défaut de positionnement de la pièce mâle ou femelle et/ou de la pièce complémentaire par rapport à leurs positions nominale respectives lors des opérations de préhension de la pièce mâle ou femelle et de mise en place de cette dernière sur la pièce complémentaire, est caractérisé en ce que la pièce intermédiaire comprend de plus une seconde partie en forme de trémie pyramidale solidaire du moyen de préhension et de mise en place précité et fixée tête-bêche à la première partie en forme de trémie dans un logement de forme complémentaire de cette dernière par l'intermédiaire d'un second organe élastique de rappel susceptible de se déformer lors du retrait du moyen de préhension et de mise en place des pièces mâle ou femelle et complémentaire pour permettre une séparation de la seconde partie en forme de trémie de la première partie, la seconde partie étant conformée de façon à également permettre un décentrage de celle-ci relativement à la première partie et rattraper ainsi le recentrage de la première partie dans le logement du support.

Selon une autre caractéristique de l'invention, la première partie formant trémie est convergente vers les deux pièces précitées et la seconde partie formant trémie est divergente vers ces pièces.

Selon encore une autre caractéristique de l'invention, le premier organe élastique de rappel est constitué par un ressort de compression monté entre le support et une tête d'un poussoir en appui sur la première partie en forme de trémie.

Selon toujours une autre caractéristique de l'invention, le second organe élastique est constitué par un ressort de compression monté dans une cavité interne de la seconde partie formant trémie et prenant appui respectivement sur la face interne de la paroi extrême supérieure de la cavité interne et, par l'intermédiaire d'éléments d'adaptation, sur un axe solidaire de la première partie formant trémie.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 est une vue en coupe longitudinale d'un poignet et représentant le mode d'assemblage d'un connecteur électrique à sa contre-partie mâle ou femelle ; et

Les figures 2 à 4 sont également des vues en coupe longitudinale du poignet et représentant l'extraction du moyen préhenseur du connecteur électrique et de sa contre-partie.

En se reportant aux figures, la référence 1 désigne un poignet de robot destiné à saisir un connecteur électrique par exemple mâle 2 et à l'assembler sur un connecteur électrique femelle 3 fixé à un support 4 par des vis de fixation 5 dont une seule est représentée.

Le poignet 1 comprend un support 6 en forme de boîtier dont la paroi supérieure 6a comporte en son centre un axe 7 d'assemblage du poignet 1 à l'extrémité d'un bras du robot (non représenté).

Le poignet 1 comprend de plus un moyen 8 de préhension du connecteur électrique 2 et de mise en place de ce dernier sur le connecteur électrique 3. Ce moyen de préhension et de mise en place 8 comprend un plateau 9 auquel sont fixées au moins deux broches parallèles diamétralement opposées 10 s'étendant sensiblement perpendiculairement en dessous du plateau 9 et, solidaires du plateau 9, une partie 11 en forme de trémie pyramidale renversée ou divergente vers le connecteur électrique 2. De préférence, le plateau 9 et la partie en forme de trémie 11 sont réalisés en une seule pièce.

Les connecteurs électriques 2 et 3 comportent chacun au moins deux perçages diamétralement opposés 2a et 3a pour le passage d'une broche correspondante 10 du moyen de préhension et de mise en place 8, chaque perçage 2a, 3a ayant une entrée d'engagement d'une broche sensiblement tronconique. Chaque broche 10 a son extrémité libre présentant une forme tronconique pour faciliter son introduction dans le perçage correspondant 2a, 3a.

Le moyen de préhension et de mise en place 8, comprenant la partie en forme de trémie 11, est relié au support 6 par une pièce intermédiaire comportant une autre partie en forme de trémie pyramidale 12 montée tête-bêche avec la partie 11 par l'intermédiaire d'une pièce 13 solidaire de la partie 12 et comportant un logement en tronc de pyramide dans lequel vient normalement s'ajuster la partie en forme de trémie 11. La partie en forme de trémie 12, qui converge vers le connecteur électrique 2, est maintenue en appui, en position de repos du poignet 1, dans un logement ou ouverture centrale 6b pratiquée à travers la paroi inférieure 6c par l'intermédiaire d'un dispositif formant poussoir 14 comprenant un ressort de compression de rappel 15 monté entre la tête 16 du dispositif formant poussoir 14 et l'extrémité inférieure de l'axe 7 solidaire du support 6, la tête 16 se trouvant ainsi en appui sur la première partie en forme de trémie 12. La tige 17 du dispositif formant poussoir 14 coulisse dans un trou borgne correspondant 7a réalisé dans l'axe 7. Le logement 6b, en forme de tronc de pyramide fait ainsi office de siège d'appui de la partie 12 à la position de repos du poignet 1.

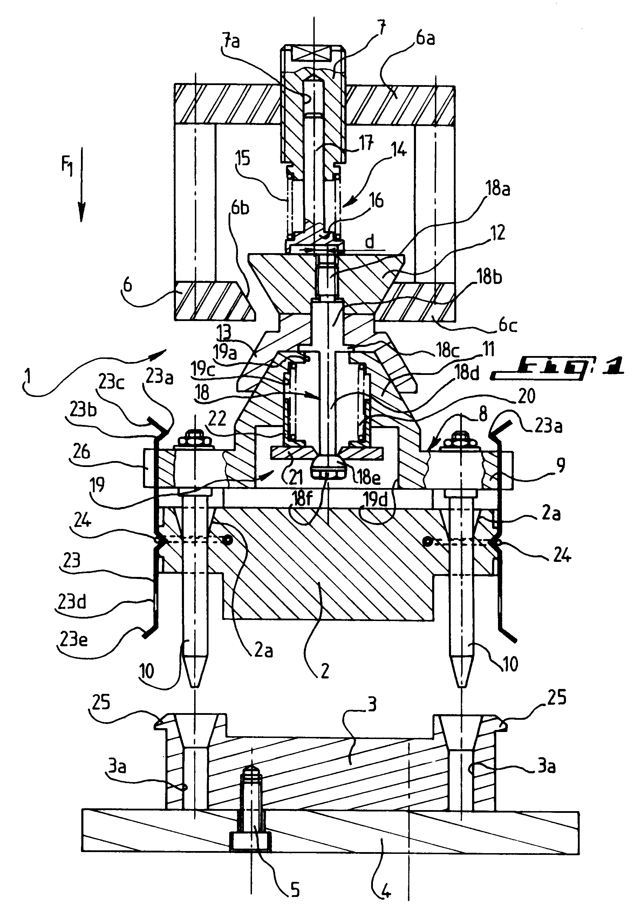

La pièce 13 est assemblée et fixée à la partie 12 par un axe 18 comprenant successivement de haut en bas par rapport à la figure 1 une partie filetée 18a vissée dans un taraudage correspondant de la partie 12, une portion cylindrique 18b de centrage de la pièce 13 relativement à la partie 12, un épaulement 18c s'engageant dans un lamage correspondant réalisé au fond du logement de la pièce 13 dans lequel s'ajuste la partie 11, une tige 18d se terminant par une portée de préférence sphérique 18e et une tête de vis 18f pour visser la partie 18a dans la partie 12 et fixer ainsi par serrage, en amenant l'épaulement 18c en appui sur son lamage correspondant, la pièce 13 à la partie 12. La tige 18d, en position de repos du poignet 1, s'étend dans une cavité coaxialement à celle-ci pratiquée dans le moyen de préhension et de mise en place 8. Cette cavité est définie successivement de haut en bas par une ouverture centrale et supérieure 19a réalisée à travers la paroi extrême supérieure de la partie 11, une chambre intermédiaire 19c de plus grande dimension et une chambre inférieure 19d de dimension supérieure à la chambre intermédiaire 19c.

La partie en forme de trémie 11 est fixée tête-bêche avec la partie en forme de trémie 12 par un ressort de compression de rappel 20 monté approximativement dans la chambre intermédiaire 19c en prenant appui respectivement sur la face interne de la paroi extrême supérieure définissant l'ouverture 19c et l'axe 18 par l'intermédiaire d'éléments d'adaptation comprenant la portée 18e, une rondelle 21 reposant sur la portée 18e, une partie formant piston 22 supportée par la rondelle 21 et susceptible de coulisser axialement dans la chambre 19c en agissant sur le ressort 20. A l'état de repos, le ressort 20 est détendu de façon à maintenir la partie en forme de trémie 11 dans son logement correspondant de la pièce 13. De plus, le dispositif formant poussoir 14, l'axe 18, le ressort 20 et la partie en forme de trémie 11 sont coaxiaux à l'axe vertical du logement 6b dans lequel repose la partie en forme de trémie 12.

Le connecteur électrique 2 comprend des moyens 23 de fixation automatique, d'une part, du connecteur 2 au moyen de préhension 8 lors de la saisie par ce dernier du connecteur 2 et, d'autre part, du connecteur 3 au connecteur 2 lors de leur assemblage l'un sur l'autre. Ces moyens de fixation comprennent au moins deux lames élastiques diamétralement opposées solidaires chacune du connecteur 2 à l'aide par exemple d'une corde à piano 24 et disposées verticalement. Chaque lame 23 comporte à son extrémité supérieure un dièdre à arête horizontale 23a composé d'une partie pentée 23b dirigée vers l'intérieur suivie d'une partie pentée 23c dirigée vers l'extérieur. De plus, chaque lame élastique 23 comprend à son extrémité inférieure une ouverture rectangulaire ou fenêtre 23d suivie d'une partie pentée 23e orientée vers l'extérieur. La fenêtre 23d est destinée à recevoir par encliquetage une saillie 25 du connecteur électrique 3, la partie pentée 23e permettant l'écartement vers l'extérieur de la moitié inférieure de la lame élastique 23 pendant l'encliquetage. Le moyen de préhension 8 comprend deux fentes 26 diamétralement opposées réalisées dans le plateau 9 et d'une largeur légèrement supérieure à la largeur de chaque lame élastique 23. Chaque moitié supérieure de lame élastique 23 s'engage par encliquetage du dièdre dans la fente correspondante 26 après écartement vers l'extérieur de celle-ci par la partie pentée 23c.

Le fonctionnement du poignet selon un mode de réalisation de l'invention résulte déjà en partie de la description qui en a été faite ci-dessus et va être maintenant détaillé.

Tout d'abord, le robot amène le moyen de préhension 8 à la position nominale du connecteur électrique 2 de façon que les broches 10 soient disposées sensiblement coaxialement au-dessus des perçages 2a. Le robot descend suivant la flèche F1 vers le connecteur électrique 2 pour que les broches 10 s'engagent dans les perçages 2a. Dans le cas d'un défaut de positionnement du connecteur électrique 2 relativement à sa position nominale, les broches 10 seront décalées par rapport aux axes verticaux des perçages 2a. En supposant que les broches 10 sont décalées vers la gauche relativement aux axes verticaux des perçages 2a, l'extrémité tronconique de chaque broche 10 vient en appui sur la paroi de gauche de l'entrée tronconique du perçage correspondant 2a lors de la descente suivant la flèche F1, soulevant ainsi la partie 12 à l'encontre de la force de rappel du ressort 15 et la décalant vers la droite par rapport à la figure 1 qui représente le décalage ou décentrage $d$ que prend alors l'ensemble moyen de préhension 8 et partie 12 par rapport à l'axe vertical du logement 6b. Le décentrage $d$ de cet ensemble permet aux broches 10 de pénétrer sans risque de coincement ou de blocage dans leurs perçages respectifs 2a, compensant ou rattrapant ainsi le défaut de positionnement susmentionné. Les broches 10 peuvent donc pénétrer librement dans leurs perçages respectifs 2a jusqu'à ce que le connecteur 2 soit solidarisé au moyen de préhension 8 par encliquetage des parties supérieures des lames élastiques 23 dans leurs fentes correspondantes 26. Le robot a ainsi saisi le connecteur électrique 2 et va ensuite positionner le moyen de préhension 8 à la position nominale du connecteur électrique 3. Il est à noter qu'une fois le connecteur électrique libéré de son support, la partie 12, sous l'action du ressort de rappel 15, va reprendre sa position de repos dans le logement 6b. De plus, en position décalée de la partie 12 celle-ci est maintenue en appui sur la surface latérale de droite du logement 6b par le ressort 15.

Le robot va ensuite commander la descente du poignet vers le connecteur électrique 3 de façon à engager les broches 10 dans les perçages 3a. En cas de défaut du positionnement du connecteur électrique 3 relativement à sa position nominale, les broches 10, comme pour la saisie du connecteur électrique 2, seront décalées par rapport aux axes verticaux des perçages 3a. Ainsi, si les broches 10 sont par exemple décalées vers la gauche relativement aux axes verticaux des perçages 3a, la partie 12 et le moyen de préhension 8 seront soulevés à l'encontre de la force de rappel du ressort 15 et décalés vers la droite par rapport à l'axe vertical du logement 6b d'une valeur correspondant à la valeur du défaut de positionnement. Les broches 10 peuvent alors librement pénétrer dans les perçages 3a. Dans la mesure où le connecteur électrique 3 est fixe, le décalage de l'ensemble partie 12 et moyen de préhension 8 est maintenu. A la fin du mouvement de descente du poignet 1, le connecteur électrique 2 est solidarisé au connecteur électrique 3 par encliquetage des parties inférieures des lames élastiques 23 aux saillies correspondantes 25.

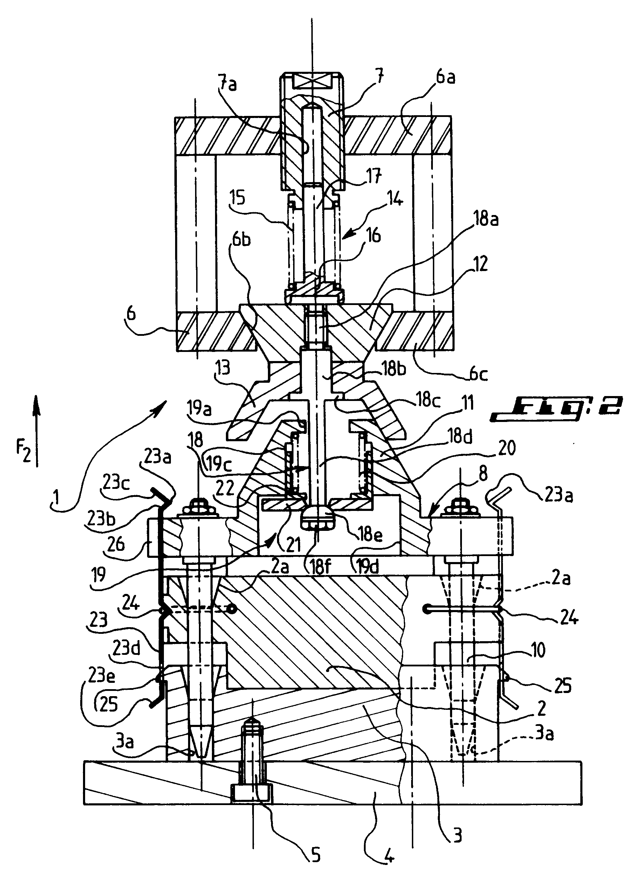

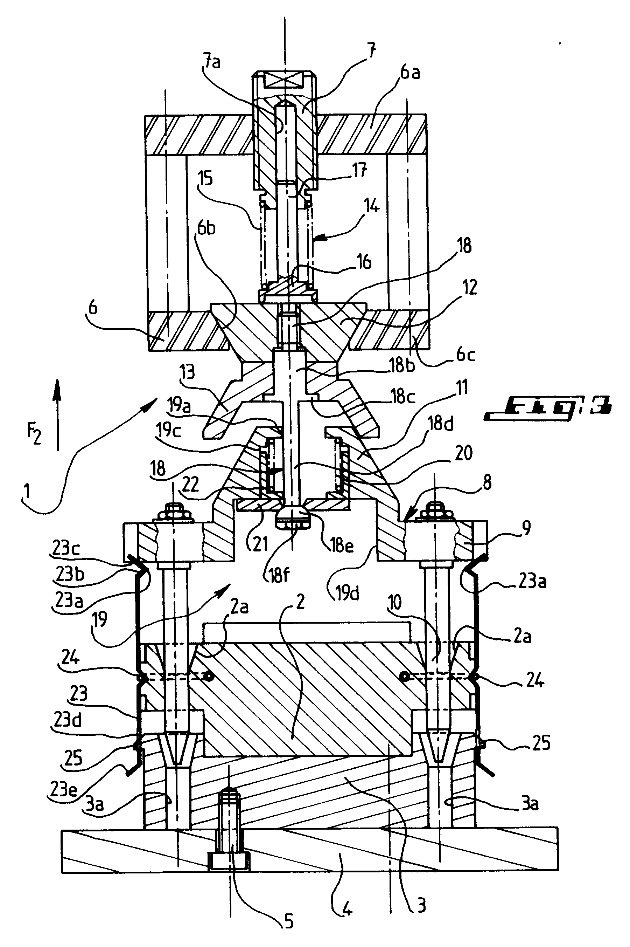

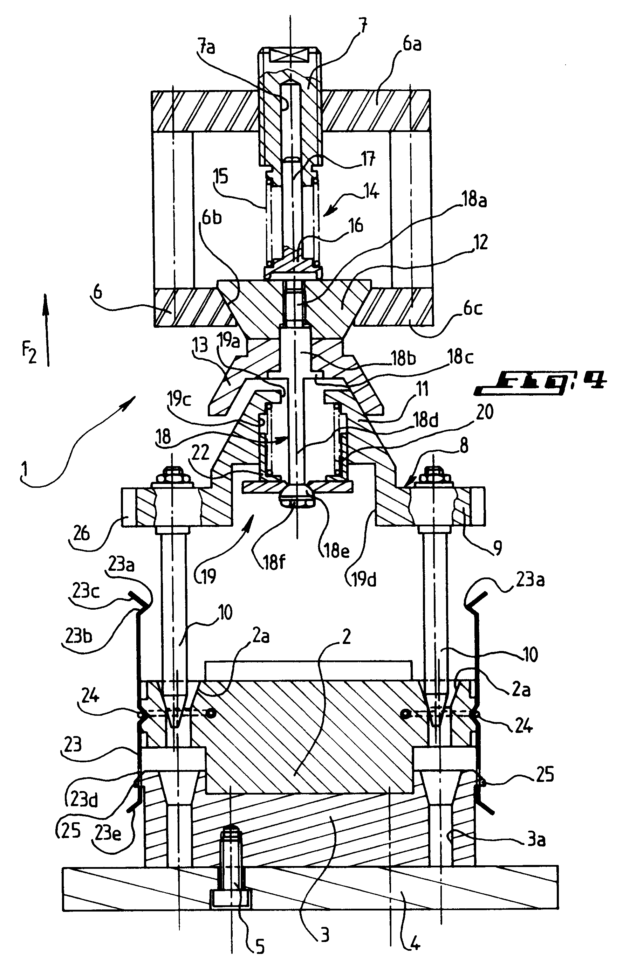

Une fois le connecteur électrique 2 assemblé au connecteur électrique 3, le robot commande l'extraction du moyen de préhension 8 des connecteurs électriques 2 et 3 suivant la direction de la flèche F2 comme représenté aux figures 2 à 4. Lors de cette extraction, la partie en forme de trémie 12 munie de sa pièce 13, a tendance à se recentrer dans son logement 6b, ce qui provoquerait un coincement des broches 10 et donc du moyen préhenseur 8 dans les connecteurs électriques 2 et 3 en l'absence de la partie formant trémie 11 montée tête-bêche relativement à la partie 12 et maintenue dans le logement de la pièce 13 par le ressort de rappel 20. La partie en forme de trémie 11 permet donc de compenser le recentrage de la partie formant trémie 12 en se libérant lors de l'extraction de son logement et se déplaçant vers la droite relativement à l'axe vertical du logement 6b dans lequel se trouve en appui la partie 12. Ce déplacement s'effectue à l'encontre de la force de rappel du ressort 20 jusqu'à ce que le décalage initial $d$ de la partie 12 soit compensé. Pour permettre le déplacement de la partie en forme de trémie 11 relativement à la tige 18d, l'ouverture 19a doit avoir une largeur largement supérieure au diamètre de la tige 18d. La figure 3 montre le moyen de préhension 8 en une position où les parties supérieures des lames élastiques 23 sont élastiquement dégagées des fentes 26 du moyen de préhension 8, les connecteurs électriques 2 et 3 restant solidaires l'un de l'autre par les parties inférieures des lames élastiques 23. En continuant l'extraction suivant la flèche F2, les broches 10 quittent les perçages 2a et le ressort 20 rappelle la partie en forme de trémie 11 dans son logement de la pièce 13 et donc vers la position de repos du poignet. La présence de la portée sphérique 18e permet des variations angulaires à la rondelle 21 et donc de donner suffisamment de liberté dans tous les plans à la partie en forme de trémie 11 lorsqu' elle est libérée de son logement et de recentrer et positionner parfaitement le moyen de préhension 8 lorsque la partie 11 n'est pas sollicitée. Le poignet 1, après retrait des broches 10 des connecteurs 2 et 3, est prêt à être repositionné par le robot pour saisir un autre connecteur et le mettre en place sur un connecteur complémentaire.

L'invention a été décrite comme se rapportant à l'assemblage de deux connecteurs électriques mais il est bien entendu que celle-ci peut également s'appliquer à d'autres pièces de forme complémentaire autres que des connecteurs électriques.

## Revendications

1. Poignet de robot destiné à saisir une pièce mâle ou femelle et à l'assembler sur une partie fixe complémentaire, du type comprenant un support relié à l'extrémité du bras du robot ; un moyen de préhension de la pièce mâle ou femelle et de mise en place de celle-ci sur la pièce complémentaire, ledit moyen de préhension et de mise en place étant relié au support et positionné par le robot relativement à la pièce mâle ou femelle et ensuite à la pièce complémentaire à leurs positions nominales respectives; le moyen de préhension et de mise en place (8) étant relié au support (6) par une pièce intermédiaire comprenant une première partie en forme de trémie pyramidale (12) maintenue par un premier organe élastique de rappel (15) dans un logement (6b) de forme complémentaire de la première partie (12) se décentrant relativement au logement (6b) du support (6) à l'encontre de la force de rappel de l'organe élastique (15) pour compenser un défaut de positionnement de la pièce mâle ou femelle (2) et/ou de la pièce complémentaire (3) par rapport à leurs positions nominales respectives lors des opérations de préhension de la pièce mâle ou femelle (2) et de mise en place de cette dernière sur la pièce complémentaire (3), caractérisé en ce que la pièce intermédiaire comprend de plus un logement de forme appropriée pour une seconde partie en forme de trémie pyramidale (11) solidaire du moyen de préhension et de mise en place (8) et fixée tête-bêche à la première partie en forme de trémie (12) dans ledit logement par l'intermédiaire d'un second organe élastique de rappel (20) susceptible de se déformer lors du retrait du moyen de préhension et de mise en place (8) des pièces mâle ou femelle (2) et complémentaire (3) pour permettre une séparation de la seconde partie (11) de la première partie (12), la seconde partie (11) étant conformée de façon à également permettre un décentrage de celle-ci relativement à la première partie (12) et rattraper ainsi le recentrage de la première partie (12) dans son logement (6b).

2. Poignet selon la revendication 1, caractérisé en ce que la première partie en forme de trémie (12) est convergente vers les deux pièces (2, 3) précitées et la seconde partie en forme de trémie (11) est divergente vers les deux pièces (2, 3).

3. Poignet selon la revendication 1 ou 2, caractérisé en ce que le premier organe élastique de rappel (15) est constitué par un ressort de compression monté entre le support (6) et une tête (16) d'un poussoir (14) en appui sur la première partie en forme de trémie (12).

4. Poignet selon l'une des revendications précédentes, caractérisé en ce que le second organe élastique précité (20) est constitué par un ressort de compression monté dans une cavité interne de la seconde partie formant trémie (11) et prenant appui respectivement sur la face interne de la paroi extrême supérieure de ladite cavité et un axe (18) solidaire de la première partie formant trémie (12) par l'intermédiaire d'éléments d'adaptation.

5. Poignet selon la revendication 4, caractérisé en ce que la paroi extrême précitée comprend une ouverture (19c) coaxiale à la cavité précitée à travers laquelle passe l'axe (18) précité et d'une largeur supérieure au diamètre de l'axe (18) de façon à permettre le décentrage précité.

6. Poignet selon la revendication 4, caractérisé en ce que les éléments d'adaptation comprennent une portée (18e) solidaire de l'extrémité de l'axe (18) précité ; une rondelle (21) reposant sur la portée (18d) ; un piston (22) supporté par la rondelle (21) et coulissant axialement dans la cavité précitée en agissant sur le second organe élastique de rappel (20).

7. Poignet selon la revendication 6, caractérisé en ce que la portée (18e) précitée est sphérique.

8. Poignet selon l'une des revendications précédentes, caractérisé en ce que la pièce mâle ou femelle (2) comprend des moyens (23) de fixation automatique de celle-ci au moyen de préhension et de mise en place (8) lors de la préhension de la pièce (2).

9. Poignet selon la revendication 8, caractérisé en ce que le moyen de fixation (23) précité solidarise également automatiquement la pièce mâle ou femelle (2) à la pièce complémentaire (3) lors de l'opération de mise en place.

10. Poignet selon la revendication 8 ou 9, caractérisé en ce que les moyens de fixation (23) sont constitués par au moins deux lames élastiques diamétralement opposées s'assemblant par encliquetage respectivement dans le moyen de préhension et de mise en place (8) et la pièce complémentaire (3).

11. Poignet selon l'une des revendications précédentes, caractérisé en ce que le moyen de préhension et de mise en place (8) comprend au moins deux broches diamétralement opposées (10) à extrémité tronconique s'engageant chacune successivement dans deux perçages correspondants (2a ; 3a) réalisés respectivement dans les deux pièces (2, 3) précitées, chaque perçage (2a, 3a) ayant une entrée d'engagement tronconique.

12. Poignet selon l'une des revendications précédentes, caractérisé en ce que le poussoir (14) et son ressort (15), les parties en forme de trémie (11, 12), l'axe (18) et le ressort (20) sont coaxiaux à l'axe vertical du logement (6b) en position de repos du poignet.

13. Poignet selon l'une des revendications précédentes, caractérisé en ce que la pièce mâle ou femelle (2) et la pièce complémentaire (3) sont respectivement constituées par deux connecteurs électriques, la pièce complémentaire (3) étant fixe.

**Patentansprüche**

1. Roboterhandgelenk, das bestimmt ist, ein einsteckbares bzw. steckgreifendes Werkstück zu ergreifen und an einem ortsfesten Ergänzungsteil zusammenzufügen, derjenigen Gattung mit einem mit dem Ende des Armes des Roboters verbundenen Träger; einem Mittel zum ergreifen des einsteckbaren bzw. steckgreifenden Werkstücks und zum Instellungbringen desselben an dem Ergängzungsstück; wobei das Greif-und Instellungbringungsmittel mit dem Träger verbunden ist und durch den Roboter gegenüber dem einsteckbaren bzw. steckgreifenden Werkstück und danach gegenüber dem Ergänzungsstück in deren jeweiligen Nominalstellungen eingestellt wird; wobei das Greif-und Instellungbringungsmittel (8) mit dem Träger (6) durch ein Zwischenstück verbunden ist, das ein erstes pyramidenförmiges trichterartiges Teil (12) aufweist, das durch ein erstes elastisches Rückstellglied (15) in einer Aufnahme (6b) dem ersten Teil (12) entsprechender Ergänzungsgestalt gehalten wird, welches sich gegenüber der Aufnahme (6b) des Trägers (6) entgegen der Rückstellkraft des elastischen Gliedes (15) dezentriert, um einen Einstellungsfehler des einsteckbaren bzw. steckgreifenden Werkstücks (2) und/oder des Ergänzungsstücks (3) gegenüber deren jeweiligen Nominallagen während den Vorgängen zum Ergreifen des einsteckbaren bzw. steckgreifenden Werkstücks (2) und zur Instellungbringen des letzteren an dem Ergänzungsstück (3) auszugleichen, dadurch gekennzeichnet, dass das Zwischenstück ausserdem eine Aufnahme geeigneter Gestalt für ein zweites mit dem Greif-und Instellungbringungsmittel (8) festverbundenes, pyramidenförmiges trichterartiges Teil (11) aufweist, welches an dem ersten trichterförmigen Teil (12) in der besagten Aufnahme über ein zweites elastisches Rückstellglied (20) verkehrt befestigt ist, welches fähig ist, sich bei dem Rückzug des Mittels (8) für das Ergreifen und Instellungbringen des einsteckbaren bzw. steckgreifenden Werkstücks (2) und des Ergänzungstücks (3) zu verformen, um eine Trennung des zweiten Teils (11) von dem ersten Teil (12) zu gestatten, wobei das zweite Teil (11) gestaltet ist, um ebenfalls ein Dezentrieren des letzteren gegenüber dem ersten Teil (12) zu gestatten und somit das Wiederzentrieren des ersten Teils (12) in seiner Aufnahme (6b) nachzustellen.

2. Handgelenk nach Anspruch 1, dadurch gekennzeichnet, dass das erste trichterförmige Teil (12) zu den beiden vorgenannten Stücken (2,3) hin konvergiert und das zweite trichterartige Teil (12) zu den beiden Stücken (2,3) hin divergiert.

3. Handgelenk nach Anspruch 1 oder 2, dadurch gekennzeichnet, dass das erste elastische Rückstellglied (15) durch eine zwischen dem Träger (6) und einem Kopf (16) eines sich an dem ersten trichterförmigen Teil (12) abstützenden Stössels angeordnete Druckfeder gebildet wird.

4. Handgelenk nach einem der vorangehenden Ansprüche, dadurch gekennzeichnet, dass das vorgenannte zweite elastische Glied (20) durch eine in einem inneren Hohlraum des zweiten trichterartigen Teils (11) angeordneten und sich jeweils an der Innenfläche der oberen Endwandung des besagten Hohlraums und an einem mit dem ersten trichterartigen Teil (12) über Anpassungselemente fest verbundenen Stift (18) abstützende Druckfeder gebildet wird.

5. Handgelenk nach Anspruch 4, dadurch gekennzeichnet, dass die vorgenannte Endwandung eine mit dem vorgenannten Hohlraum koaxiale Oeffnung (19c) aufweist, durch welche der vorgenannte Stift (18) geführt ist und eine Breite grösser als der Durchmesser des Stiftes (18) aufweist, um die vorgenannte Dezentrierung zu ermöglichen.

6. Handgelenk nach Anspruch 4, dadurch gekennzeichnet, dass die Anpassungselemente einen mit dem Ende des vorgenannten Stiftes (18) fest verbundenen Bereich (18e); eine auf dem Bereich (18d) ruhende Unterlegscheibe (21); einen von der Unterlegscheibe (21) getragenen und in dem vorgenannten Hohlraum unter Einwirkung auf das zweite elastische Rückstellglied (20) axial gleitenden Kolben (22) aufweisen.

7. Handgelenk nach Anspruch 6, dadurch gekennzeichnet, dass der vorgenannte Bereich (18e) kugelförmig ist.

8. Handgelenk nach einem der vorangehenden Ansprüche, dadurch gekennzeichnet dass das einsteckbare bzw. steckgreifende Werkstück (2) Mittel (23) zur selbsttätigen Befestigung desselben an dem Greif-und Instellungbringungsmittel (8) während des Ergreifens des Stücks (2) umfasst.

9. Handgelenk nach Anspruch 8, dadurch gekennzeichnet, dass das vorgenannte Befestigungsmittel (23) ebenfalls das einsteckbare bzw. steckgreifende Stück (2) mit dem Ergänzungstück (3) während des Einstellungsvorgangs selbsttätig fest verbindet.

10. Handgelenk nach Anspruch 8 oder 9, dadurch gekennzeichnet, dass die Befestigungsmittel (23) durch wenigstens zwei diametral entgegensetzte, durch Einrasten jeweils in das Greif- und Instellungbringungsmittel (8) und in dem Ergängzungsstück (3) zusammenfügbare elastiche Blätter gebildet wird.

11. Handgelenk nach einem der vorangehenden Ansprüche, dadurch gekennzeichnet, dass das Greif- und Instellungbringungsmittel (8) wenigstens zwei diametral entgegengesetzte, jeweils aufeinanderfolgend in zwei entsprechenden, in den beiden vorgenannten Stücken (2,3) ausgebildeten Bohrungen eingreifende Dorne (10) mit stumpfkegelförmigen Ende aufweist, wobei jede Bohrung (2a,3a) einen stumpfkegelförmigen Einfügungseintritt hat.

12. Handgelenk nach einem der vorangehenden Ansprüche, dadurch gekennzeichnet, dass der Stössel (14) und seine Feder (15), die trichterförmigen Teile (11,12), der Stift (18) und die Feder (20) koaxial mit der lotrechten Achse der Aufnahme (6b) in Ruhestellung des Handgelenks sind.

13. Handgelenk nach einem der vorangehenden Ansprüche dadurch gekennzeichnet, dass das einsteckbare bzw. steckgreifende Stück (2) und das Ergängzungstück (3) jeweils durch zwei elektrische Steckverbinder gebildet sind, wobei das Ergänzungsstück (3) ortsfest ist.


**Claims**

1. Robot wrist adapted to grip a male or female part and to assemble it onto a complementary stationary portion, of the type comprising a support connected to the end of the robot arm; a means for gripping the male or female part and for positioning the latter onto the complementary part, the said gripping and positioning means being connected to the support and positioned by the robot in relation to the male or female part and then to the complementary part in their respective nominal positions; the gripping and positioning means (8) being connected to the support (6) by an intermediate part comprising a first portion in the shape of a pyramidal hopper (12) held by a first elastic return member (15) in a recess (6b) with a shape complementary of the first portion (12) being decentred in relation to the recess (6b) for the support (6) against the return force of the elastic member (15) to compensate for a positioning defect of the male or female part (2) and/or of the complementary part (3) with respect to their respective nominal positions during the operations for gripping the male or female part (2) and for positioning the latter onto the complementary part (3), characterized in that the intermediate part further comprises a recess of suitable shape for a second portion in the shape of a pyramidal hopper (11) made fast to the gripping and positioning means (8) and fastened in head-to-foot relationship to the first hopper-shaped portion (12) within the said recess through the medium of a second elastic return member (20) likely to become deformed upon the withdrawal of the means (8) for the gripping and positioning of the male or female part (2) and of the complementary part (3) to allow a separation of the second portion (11) from the first portion (12), the second portion (11) being shaped so as to also allow a decentering thereof in relation to the first portion (12) and to take thus up the recentering of the first portion (12) within its recess (6b).

2. Wrist according to claim 1, characterized in that the first hopper-shaped portion (12) is converging towards both aforesaid parts (2,3) and the second hopper-shaped portion (11) is diverging towards both parts (2,3).

3. Wrist according to claim 1 or 2, characterized in that the first elastic return member (15) is constituted by a compression spring mounted between the support (6) and a head (16) of a pusher (14) bearing upon the first hopper-shaped portion (12).

4. Wrist according to one of the foregoing claims, characterized in that the aforesaid second elastic member (20) is constituted by a compression spring mounted within an internal cavity of the second hopper-forming portion (11) and bearing respectively upon the internal face of the upper end wall of the said cavity and a pin (18) made fast to the first hopper-forming portion (12) through the medium of adaptation elements.

5. Wrist according to claim 4, characterized in that the aforesaid end wall comprises an opening (19c) coaxial with the aforesaid cavity and through which extends the aforesaid pin (18) and of a width greater than the diameter of the pin (18) so as to allow the aforesaid decentering.

6. Wrist according to claim 4, characterized in that the adaptation elements comprise a portion (18e) solid with the end of the aforesaid pin (18); a washer (21) resting upon the portion (18d); a piston (22) supported by the washer (21) and axially sliding in the aforesaid cavity while acting upon the second elastic return member (20).

7. Wrist according to claim 6, characterized in that the aforesaid portion (18e) is spherical.

8. Wrist according to one of the foregoing claims, characterized in that the male or female part (2) comprises means (23) for the automatic fastening thereof to the gripping and positioning means (8) upon the gripping of the part (2).

9. Wrist according to claim 8, characterized in that the aforesaid fastening means (23) also makes automatically the male or female part (2) fast to the complementary part (3) during the positioning operation.

10. Wrist according to claim 8 or 9, characterized in that the fastening means (23) consists of at least two diametrally opposite elastic blades getting assembled through interlocking into the gripping and positioning means (8) and the complementary part (3), respectively.

11. Wrist according to one of the foregoing claims, characterized in that the gripping and positioning means (8) comprises at least two diametrally opposite spindles (10) with frusto-conical ends extending each one successively into two corresponding bores (2a;3a) formed in both aforesaid parts (2,3), respectively, each bore (2a,3a) having a frusto-conical engagement inlet.

12. Wrist according to one of the foregoing claims, characterized in that the pusher (14) and its spring (15), the hopper-shaped portions (11,12), the pin (18) and the spring (20) are coaxial with the vertical axis of the recess (6b) in the rest position of the wrist.

13. Wrist according to one of the foregoing claims, characterized in that the male or female part (2) and the complementary part (3) are constituted by two electrical connectors, respectively, the complementary part (3) being stationary.

*Fig. 1*

Fig. 2

Fig. 3

Fig. 4